# EUROPEAN PATENT APPLICATION

(11) **EP 4 722 842 A1**
(43) Date of publication of application: **08.04.2026**
(21) Application number: 24864298.5
(22) Date of filing: 30.07.2024
(51) Int. Cl.: G05D 1/43, G05D 105/20

(54) **MOBILE ROBOT, AND COLLABORATIVE CONTROL METHOD AND ARCHITECTURE THEREFOR**

(30) Priority: 14.09.2023 CN 202311188636
(71) Applicant: Shanghai Sage Intelligent Technology Co., Ltd., Shanghai 200240 (CN)
(72) Inventor: ZHANG, Jianzheng, Shanghai 200240 (CN); WEI, Kun, Shanghai 200240 (CN); DONG, Yi, Shanghai 200240 (CN); ZOU, Jinpei, Shanghai 200240 (CN); LI, Fangbao, Shanghai 200240 (CN)
(74) Representative: Monteiro Alves, Inês
(86) International application number: PCT/CN2024/108338
(87) International publication number: WO 2025/055575

(57) **Abstract**

A mobile robot, and a collaborative control method and architecture therefor, which are used for realizing dual/multi-robot collaborative transportation of goods. The method comprises: using robots and goods as a rigid body, and determining a virtual geometric center of the rigid body (S1); on the basis of transportation task data and sensor data of the robots, calculating motion instruction data of the virtual geometric center of the rigid body (S2); on the basis of the current motion instruction data of the virtual geometric center, acquiring current motion instruction data which respectively corresponds to the robots (S3); and sending the motion instruction data of the robots to the corresponding robots by means of real-time communication, such that the robots perform collaborative motion on the basis of the respective motion instruction data (S5). The collaborative control method for robots can improve the collaborative control effect and performance of mobile robots during a collaborative operation.

## Description

### TECHNICAL FIELD

The present invention relates to the field of mobile robot control technologies, and particularly to a mobile robot, and a collaborative control method and an architecture therefor.

### BACKGROUND ART

In the field of intelligent manufacturing, intelligent robots are replacing manpower and even certain mechanical equipment in production links. In manufacturing scenarios, it is often necessary to transfer, install, or reorient large equipment within a site. Conventional methods typically rely on coordinated use of gantry cranes and transport pallets in a workshop. Such conventional operational approaches involve multiple operation steps, lack flexibility, and have low safety, making them unable to meet demands of intelligent and digital production. Therefore, there is a need for a safer, more flexible, and more intelligent operation method.

The operational approach represented by intelligent mobile robots offers new possibility for achieving intelligent and digital production steps.

The collaborative operation with dual or multiple mobile robots is an intelligent robotcentric solution that has been developed in recent years. Under collaborative control, the dual/multiple mobile robots realize the operation, such as transport, on the same target object. However, even when each robot is controlled based on a unified collaborative control strategy and all mobile robot bodies used are of the same model, practical control performance of the robots may still vary. When such variations are relatively significant, each robot body executing the collaborative operation will be subjected to substantial additional stress or external force. For example, when jointly carrying a certain target object, variations in robot control performance will generate horizontal external forces between the robots and the target object, thereby compromising the final transport operation and potentially leading to task failure. To address the problem of actual performance inconsistency arising from control performance variations during cooperative operation of dual/multiple robots, there is a need to propose a new technical solution, which achieves real-time control within a robot control system and ensures real-time synchronization of such real-time performance among dual or several collaborating robots, so as to establish a prerequisite for collaborative control, thereby ensuring synchronized control performance across the collaborating robots.

### SUMMARY

In view of the above shortcomings of the prior art, the present invention provides a mobile robot and a collaborative control method and architecture therefor, so as to improve the collaborative control effect and performance of dual/multiple mobile robots during a collaborative operation.

In order to achieve the above objective, the present invention employs technical solutions as follows.

In the first aspect, the present invention provides a collaborative control method for mobile robots, applied to collaboratively transfer a cargo by a first robot and at least one second robot, where the method includes, executing, by the first robot, steps of:
taking the first robot, the second robot, and the cargo as a single rigid body, and determining a virtual geometric center of the rigid body;
calculating current motion instruction data of the virtual geometric center based on received transfer task data, sensor data of the first robot itself, and sensor data of the second robot;
calculating current respective motion instruction data for the first robot and the second robot based on the current motion instruction data of the virtual geometric center point; and
transmitting the current motion instruction data for the second robot to the corresponding second robot, so as to allow the second robot and the first robot to perform collaborative motions based on the current respective motion instruction data.

Further, periods (cycles) for performing internal control, internal data transmission, and external data transmission by the first robot and the second robot are identical or integer multiples of one another, and are based on a common clock signal.

Further, the first robot receives the sensor data of the second robot via a first communication module;
the first robot transmits current motion instruction data for the second robot to the corresponding second robot via the first communication module, or via the first communication module and a second communication module, where
the first communication module is a Zigbee communication module, and the second communication module is a WIFI communication module.

Further, the step of calculating the current motion instruction data of the virtual geometric center based on the received transfer task data, the sensor data of the first robot itself, and the sensor data of the second robot includes:
calculating actual trajectory data of the virtual geometric center based on the sensor data of the first robot and the sensor data of the second robot;
calculating desired trajectory data of the virtual geometric center based on the transfer task data and the actual trajectory data of the virtual geometric center; and
calculating current motion instruction data of the virtual geometric center based on the desired trajectory data of the virtual geometric center.

Further, the step of calculating the actual trajectory data of the virtual geometric center based on the sensor data of the first robot and the sensor data of the second robot includes:
calculating actual motion data of the first robot and the second robot based on the sensor data of the first robot and the sensor data of the second robot;
calculating actual motion data of the virtual geometric center based on the actual motion data of the first robot and the second robot; and
calculating the actual trajectory data of the virtual geometric center based on the actual motion data of the virtual geometric center.

Further, the step of calculating the actual motion data of the virtual geometric center based on the actual motion data of the first robot and the second robot includes:
performing reverse conversion, based on a pre-established conversion matrix, on the actual motion data of the first robot and the second robot, to obtain the actual motion data of the virtual geometric center; and
the step of calculating current respective motion instruction data for the first robot and the second robot based on the current motion instruction data of the virtual geometric center point includes:
   performing conversion on the current motion instruction data of the virtual geometric center based on the conversion matrix, so as to decompose the current motion instruction data of the virtual geometric center into current respective motion instruction data for the first robot and the second robot.

Further, the first robot simultaneously transmits current motion instruction data for the second robot to the corresponding second robot via a first communication module and a second communication module, and the method further includes executing, by the second robot, data fusion steps of:
determining whether a timestamp and a location stamp corresponding to the motion instruction data from the first communication module and the second communication module match;
in response to that either the timestamp or the location stamp matches, performing fusion on the matched motion instruction data, and taking a fused result as final motion instruction data; and in response to that neither the timestamp nor the location stamp matches, discarding the motion instruction data from the second communication module, and taking the motion instruction data from the first communication module as final motion instruction data; alternatively,
in response to that both the timestamp and the location stamp match, performing fusion on the matched motion instruction data, and taking a fused result as final motion instruction data; and in response to that either the timestamp or the location stamp does not match, discarding the motion instruction data from the second communication module, and taking the motion instruction data from the first communication module as final motion instruction data.

In the second aspect, the present invention provides a mobile robot, where the mobile robot is the first robot or the second robot implementing the collaborative control method as described in the preceding, and the robot includes a robot body, drive wheels provided at a bottom of the robot body, and a bearing platform provided on top of the robot body and configured to bear the cargo.

Further, the mobile robot is a differential drive robot;
the bearing platform is configured to be actively or passively rotatable on the robot body; and/or
the bearing platform is a liftable structure or a non-liftable structure.

In the third aspect, the present invention provides a collaborative control architecture for mobile robots, where the architecture includes a first robot and at least one second robot collaboratively transferring a cargo, and the first robot, the second robot, and the cargo serve as a single rigid body;
the first robot calculates current motion instruction data of a virtual geometric center of the rigid body based on transfer task data, sensor data of the first robot itself, and sensor data of the second robot, and decomposes current motion instruction data of the virtual geometric center into current respective motion instruction data for the first robot and the second robot; and
the second robot and the first robot perform collaborative motions based on the current respective motion instruction data.

Further, the first robot is further configured to:
calculate respective actual trajectory data of the first robot and the second robot based on the sensor data of the first robot and the sensor data of the second robot;
calculate a desired motion trajectory of the virtual geometric center based on the transfer task data and the respective actual trajectory data of the first robot and the second robot; and
calculate respective trajectory instruction data of the first robot and the second robot based on the desired motion trajectory of the virtual geometric center, so as to allow the second robot and the first robot to perform collaborative motions based on the current respective motion instruction data and the trajectory instruction data; and
the first robot further calculates an error change value between the respective trajectory instruction data and the actual trajectory data for the first robot and the second robot over an interval of a previous predetermined duration, and correct the current respective trajectory instruction data for the first robot and the second robot based on the corresponding error change value.

Further, the first robot and the second robot are further respectively configured with a hub electric motor configured to be driven by a corresponding servo drive, and a motion control unit correspondingly connected to the servo driver, where
the motion control units of the first robot and the second robot control the respective servo drives to operate based on the current respective motion instruction data, so as to allow the first robot and the second robot to perform collaborative motions based on the current respective motion instruction data.

Further, the motion control units of the first robot and the second robot send the corresponding motion instruction data once to the corresponding servo drives at every first predetermined period (cycle) T₀;
the first robot sends the corresponding motion instruction data once to the motion control unit of the first robot itself via a control data channel at every second predetermined period T₁;
the first robot sends the corresponding motion instruction data once to the first communication module via the control data channel at every third predetermined period T₂, so as to transmit the corresponding motion instruction data to the corresponding second robot through the first communication module;
an operation period of the first communication module is a fourth predetermined period T₃, and an internal control period of the servo drives is a fifth predetermined period T_{c}, where
the first predetermined period T₀, the second predetermined period T₁, the third predetermined period T₂, the fourth predetermined period T₃, and the fifth predetermined period T_{c} are equal or integer multiples of one another; and the control data channel, the first communication module, and the motion control unit employ a same clock signal.

Through the above technical solutions, the present invention has following benefit effects.

The present invention takes various robots and the cargo as a single rigid body, calculates current motion instruction data of the virtual geometric center based on the sensor data of the robots, decomposes the current motion instruction data of the virtual geometric center into current respective motion instruction data for the first robot and the second robot, and issues the same in real time, thus achieving real-time closed-loop control across the robots, maintaining real-time synchronization across respective collaborating robots, and providing a prerequisite for the collaborative control, thereby ensuring the collaborative control effect and performance during collaborative operations of the mobile robots. In addition, transmitting the main motion control data and sensor data via Zigbee can further ensure real-time performance, the internal control, data transmission, and the external communication data transmission of the robots maintain a unified rhythm, that is, with unified clock signals and data update periods that are either equal or integer multiples of one another, which can further ensure the effect of collaborative control.

### BRIEF DESCRIPTION OF DRAWINGS

FIG. 1 is a schematic diagram of collaborative operation of mobile robots in the present invention;
FIG. 2 is a structural schematic diagram of a mobile robot in the present invention;
FIG. 3 is a top view of a mobile robot in the present invention;
FIG. 4 is a control flowchart with system motion parameters of mobile robots in the present invention ;
FIG. 5 is a flowchart of a collaborative control method for mobile robots in the present invention;
FIG. 6 is a schematic diagram of a control process of a collaborative control method for mobile robots in the present invention;
FIG. 7 is a schematic diagram of a data fusion processing method employed in the present invention; and
FIG. 8 is a collaborative control architecture diagram of mobile robots of the present invention.

### DETAILED DESCRIPTION OF EMBODIMENTS

In order to make the objective, technical solutions, and advantages of the present invention clearer and more understandable, the present invention is further described in detail below in conjunction with drawings and embodiments. It should be understood that the embodiments described herein are merely used to explain the present invention but not to limit the present invention. Based on the embodiments in the present invention, all of other embodiments obtained by those ordinarily skilled in the art without using any inventive efforts shall fall within the scope of protection of the present invention.

The terms used in the present invention are merely for the purpose of describing specific embodiments, rather than limiting the present invention.

The singular forms, "a/an," "the," and "this," used in the present invention and the appended claims also aim at including plural forms, unless otherwise clearly indicated in the context. It also should be understood that the term "and/or" used herein refers to any or all possible combinations containing one or more associated items listed.

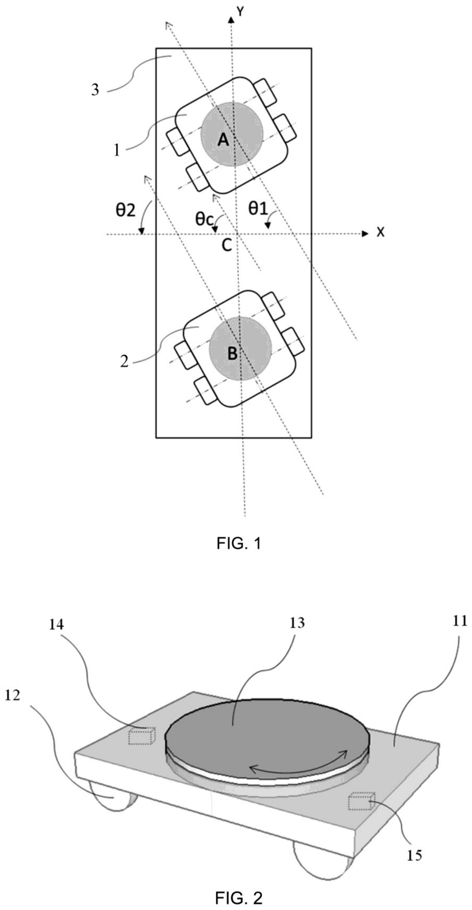

As shown in FIG. 1, the present invention employs two or more (two in the drawing) mobile robots (referred to as robots hereinafter for short) 1 and 2 operating collaboratively with each other, to jointly carry the same cargo 3, and complete automated navigation and transfer operations, thereby achieving fully intelligent and fully digitally controlled operations.

In the present invention, a robot positioned at the front in a forward direction can be designated as a first robot 1, and remaining robot(s) can be designated as second robot(s) 2. The robots 1 and 2 have identical physical structures and internal control architectures. A distinction lies in that in addition to controlling its own motion, the first robot 1 also assumes a role of a lead robot. Motion instructions for the cargo 3 need to be issued from the first robot 1. Although the second robot 2 possesses the same control architecture and the same capabilities, as a collaborative party in a collaborative operation, it does not undertake a task of actively controlling overall transport of the cargo 3, and merely receives instructions from the first robot 1 and instructions from a robot dispatch system or engages in bidirectional communication. It should be noted that, the present invention does not restrict the position of the first robot 1, and the first robot 1 and the second robot 2 are interchangeable.

A structure of each mobile robot for collaborative operations in the present invention, as shown in FIG. 2 to FIG. 3, specifically includes: a robot body 11, drive wheels 12 provided at a bottom of the robot body 11, and a bearing platform 13 provided on top of the robot body 11. Herein, the robot body 11 is further provided with a first communication module 14 (such as a Zigbee communication module) configured for data interaction with other robots, and a second communication module 15 (such as a WIFI communication module, or a WIFI/5G communication module integrating WIFI and 5G) configured for data interaction with the robot dispatch system and other robots. Herein, motion data (including instruction data and sensor data) between two robots or multiple robots are primarily transmitted via Zigbee; other data is primarily transmitted via WIFI. The primary use of Zigbee for motion data transmission takes advantage of characteristics of high reliability and ease of achieving real-time performance of such communication approach, to enable real-time motion control data interaction between dual/multiple robots, thereby ensuring the real-time and synchronized motion control.

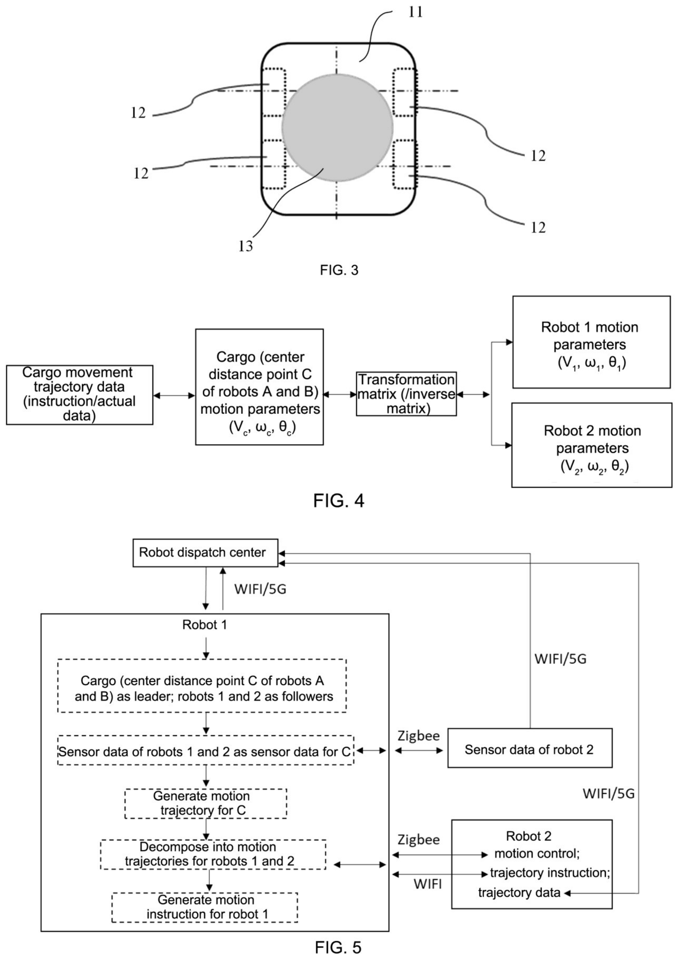

It should be understood that the drive wheels 12 can perform forward rotation (forward movement) and reverse rotation (backward movement) or steering under the control of a robot controller. In an implementable mode, as shown in FIG. 3, the mobile robot employs four drive wheels 12 to adapt to heavy-load transport. The mobile robot is preferably a differential drive robot, i.e., the drive wheels 12 on the left side and the drive wheels 12 on the right side are differential drive. The two drive wheels 12 on the left side are controlled by a common control signal, and can be considered as having identical real-time rotational velocity, steering (rotation) angle, and acceleration/deceleration. The two drive wheels 12 on the right side are controlled by another common control signal, and can also be considered as having identical real-time rotational velocity, steering (rotation) angle, and acceleration/deceleration.

In an implementable mode, it is also feasible that only two front wheels are drive wheels, and two rear wheels are driven wheels. It should be understood that when all the four wheels are drive wheels, it helps enhance mobility of the robot when carrying relatively heavy cargo 3.

In the present invention, the bearing platform 13 is configured to support the cargo 3, and can be designed as a non-actuated (passively rotating) type, that is, it can passively rotate freely in a horizontal plane under an external force. It can also be designed as an actively-actuated type, meaning that it is driven by an electric motor and gears, and can rotate under the control of the robot controller. The bearing platform 13 can be designed as an actively liftable structure, or as a non-liftable structure. The liftable structure can move vertically, so as to raise or lower a height of the cargo 3.

In the present invention, when the load-bearing collaborative mobile robot based on differential drive wheels carries the cargo 3, since the bearing platform thereon is a rotatable structure (either actively rotating or passively rotating), under the collaborative control, the cargo 3 can be moved in any direction, offering high flexibility, thereby enabling operations such as turning and rotating in confined spaces.

In the present invention, the robots 1 and 2 and the cargo 3 are considered as a single rigid body. With velocity, steering angle, etc. of a virtual geometric center of the rigid body as reference targets, and based on perception sensors integrated on each robot body, collaborative operation tasks including automated navigation, automated pose adjustment, and autonomous movement are accomplished.

Herein, a symmetric point of robot centers is defined as the virtual geometric center of the rigid body. For the dual-robot collaborative operation as shown in FIG. 1, midpoint C between centers A and B of the two robots 1 and 2 is taken as the virtual geometric center of the rigid body. A movement index of the cargo 3 as a whole is evaluated based on parameters such as velocity and angle of the point C. That is, during collaborative control, motion of the point C represents motion of the entire cargo.

In FIG. 1, a steering angle θ1 is an included angle between a travel direction of the first robot 1 and a line perpendicular to a line connecting geometric centers of the two robots; a steering angle θ2 is an included angle between a travel direction of the second robot 2 and the line perpendicular to a line connecting geometric centers of the two robots; and a steering angle θc is an included angle between a travel direction of the midpoint C and the line perpendicular to a line connecting geometric centers of the two robots. Under collaborative control of the two robots 1 and 2, θ1 and θ2 may be the same or different.

When bearing the cargo 3, the robot 1 and the robot 2 can respectively rotate about the point A and the point B (in this case, left-side wheels and right-side wheels rotate in opposite directions).

In order to achieve collaborative control over two or more mobile robots, when the first robot 1 is determined as the "lead" robot, a control calculation unit is integrated into the first robot 1 to provide a collaborative control method for mobile robots. As shown in FIGS. 4-6, the method includes steps as follows.

S1: taking the first robot 1, the second robot 2, and the cargo 3 as a single rigid body, and determining the virtual geometric center of the rigid body.

As mentioned in the preceding, the symmetric point of robot centers is defined as the virtual geometric center of the rigid body. For the dual-robot collaborative operation as shown in FIG. 1, the midpoint C between the centers A and B of the two robots 1 and 2 is taken as the virtual geometric center of the rigid body.

S2: calculating current motion instruction data (also referred to as motion instruction parameters) of the virtual geometric center point C based on received transfer task data, sensor data of the first robot 1, and sensor data of the second robot 2.

Specifically, the sensor data of the first robot 1 and the second robot 2 is respectively derived from respective integrated perception sensors. The sensor data of the second robot 2 is transmitted to the first robot 1 via the preceding first communication module (Zigbee). Due to characteristics of high reliability and ease of achieving real-time performance, the Zigbee communication enables real-time data interaction between dual/multiple robots, thereby ensuring the real-time and synchronized motion control.

The transfer task data may include, for example, a start address, a target address, a transfer route trajectory, and a relevant state of the virtual geometric center point C, typically issued by a robot dispatch center. The first robot 1 communicates with the robot dispatch center via the second communication module (WIFI/5G), so as to receive the transfer task data issued by the robot dispatch center.

Calculation in step S2 is specifically performed through steps S21 and S22 as follows.

S21: calculating actual trajectory data of the virtual geometric center point C based on the sensor data of the first robot 1 and the sensor data of the second robot 2.

Herein, in step S21, the actual trajectory data of the virtual geometric center C is calculated through steps as follows.

S211: calculating actual motion data of the first robot 1 and the second robot 2 based on the sensor data of the first robot 1 and the sensor data of the second robot 2. Herein, the actual motion data of the first robot 1 includes an actual movement linear velocity V1, an actual movement angular velocity ω1, and an actual steering angle θ1 of the first robot 1 (represented by point A); the actual motion data of the second robot 2 includes an actual movement linear velocity V2, an actual movement angular velocity ω2, and an actual steering angle θ2 of the second robot 2 (represented by point B).

S212: calculating actual motion data of the virtual geometric center point C based on the actual motion data of the first robot 1 and the second robot 2. Specifically, based on a pre-established conversion matrix, reverse conversion can be performed on the actual motion data of the first robot 1 and the second robot 2 to obtain the actual motion data of the point C, including an actual movement linear velocity Vc, an actual movement angular velocity ωc, and an actual steering angle θc of point C. The conversion matrix is a matrix established by taking all the robots 1 and 2 and the cargo 3 as a single rigid body and configured to represent a coordinate conversion relationship between a kinematic model of the cargo 3 (point C) and the first robot 1 (point A) and the second robot 2 (point B).

S213: calculating the actual trajectory data of the point C, based on the actual motion data of the virtual geometric center point C, including an actual position and an actual posture (angle) of the point C.

S22: calculating current motion instruction data of the virtual geometric center point C based on the received transfer task data, the actual trajectory data of the virtual geometric center point C.

Specifically, firstly, desired trajectory data of the virtual geometric center point C is calculated based on the received transfer task data and the actual trajectory data of the virtual geometric center point C. Then, the current motion instruction data of the point C is calculated based on the desired trajectory data of the virtual geometric center C. Herein, the motion instruction data of the virtual geometric center point C includes a target movement linear velocity Vc', a target movement angular velocity ωc', and a target steering angle θc' for desired movement of the cargo 3 (i.e., point C).

S3: acquiring current respective motion instruction data for the first robot 1 and the second robot 2 based on the current motion instruction data of the virtual geometric center point C.

Specifically, based on the pre-established conversion matrix, conversion is performed on the current motion instruction data (Vc', ωc', and θc') of the point C, so as to decompose the current motion instruction data of the point C into respective motion instruction data for the first robot 1 and the second robot 2. Herein, the motion instruction data corresponding to the first robot 1 includes a target movement linear velocity V1', a target movement angular velocity ω1', and a target steering angle 01' for desired movement of the first robot 1; and the motion instruction data corresponding to the second robot 2 include a target movement linear velocity V2', a target movement angular velocity ω2', and a target steering angle θ2' for desired movement of the second robot 2.

S5: transmitting the current motion instruction data for the second robot 2 to the corresponding second robot 2 in real time, so as to allow the first robot 1 and the second robot 2 to synchronously perform collaborative motions based on the current respective motion instruction data.

Specifically, the first robot 1 can transmit corresponding motion instruction data to the corresponding second robot 2 in real time via the first communication module 14, or simultaneously transmit corresponding motion instruction data to the corresponding second robot 2 in real time via the first communication module 14 and the second communication module 15. Thus, while the first robot 1 moves based on its own motion instruction data, the second robot 2 is capable of moving synchronously based on its own motion instruction data, thereby achieving the collaborative control between the robots 1 and 2.

The robot 1 and the robot 2 respectively execute closed-loop control over action behavior based on the above data, and achieve synchronized control, so as to ensure the synchronization and accuracy of actions between the two robots.

As described in the above, motion instruction generation for the virtual geometric center point C is executed in the robot 1, in which case the virtual geometric center point C serves as a virtual leader of the two robots, and the robot 1 and the robot 2 serve as followers. The sensor data provided by the two robots is utilized as the sensor data for the virtual geometric center C; and the sensor data of the robot 2 is transmitted to the robot 1 via Zigbee communication. Based on this, the motion instruction data for the point C are generated, and decomposed into the motion instruction data for the robots 1 and 2 through the conversion matrix; then the motion instruction data (i.e., motion control instruction) is sent to the robot 2 via Zigbee communication, and trajectory instruction data is sent to the robot 2 via WIFI communication. Moreover, the robot 2 also sends its trajectory-related data to the robot dispatch center via WIFI/5G, as shown in FIG. 5.

The Zigbee communication offers high reliability but has limited transmission data bandwidth. Therefore, it is exclusively used for transmitting sensor data and motion control parameters in the present invention.

In the present invention, data related to collaborative control between the first robot 1 and the second robot 2 is transmitted via Zigbee communication, so that the advantages of high reliability, high interference resistance, and low latency of this communication technology can be utilized to ensure the real-time and reliable collaborative control between the robots. In addition, due to the relatively limited data bandwidth of Zigbee, as described in the preceding, each robot is integrated with the second communication module (such as the WIFI communication module) for interaction of other data (such as data interaction with the robot dispatch center).

The above steps enable real-time closed-loop control across collaboratively operating robots. Such real-time capability maintains real-time synchronization across respective collaborating robots, and provides a prerequisite for collaborative control, thereby ensuring the synchronized control performance among the collaborating robots.

It should be understood that the second robot 2 in the present invention may also be integrated with the preceding control calculation unit, but when the second robot 2 does not act as "lead" robot, the control calculation unit integrated therein remains inactive.

In addition, the first robot 1 and the second robot 2 in the present invention are further respectively equipped with a hub electric motor configured to drive corresponding drive wheels. The hub electric motors are driven by corresponding servo drives, which are in turn controlled by corresponding motion control units. Herein, the control calculation unit and the motion control unit of the robot can be integrated in the same robot controller of the robot, or may be separately provided in the robot controller. Upon obtaining its own current motion instruction data and current motion instruction data for the second robot 2, the first robot 1 transmits its own motion instruction data to its built-in motion control unit, and transmits the current motion instruction data for the second robot 2 to the motion control unit built in the corresponding second robot 2 in real time, so as to enable the motion control units of the first robot 1 and the second robot 2 to synchronously control corresponding servo drives to operate based on respective motion instruction data. Consequently, the first robot 1 and the second robot 2 are capable of moving synchronously based on current respective motion instruction data, thereby achieving the collaborative control between the robots.

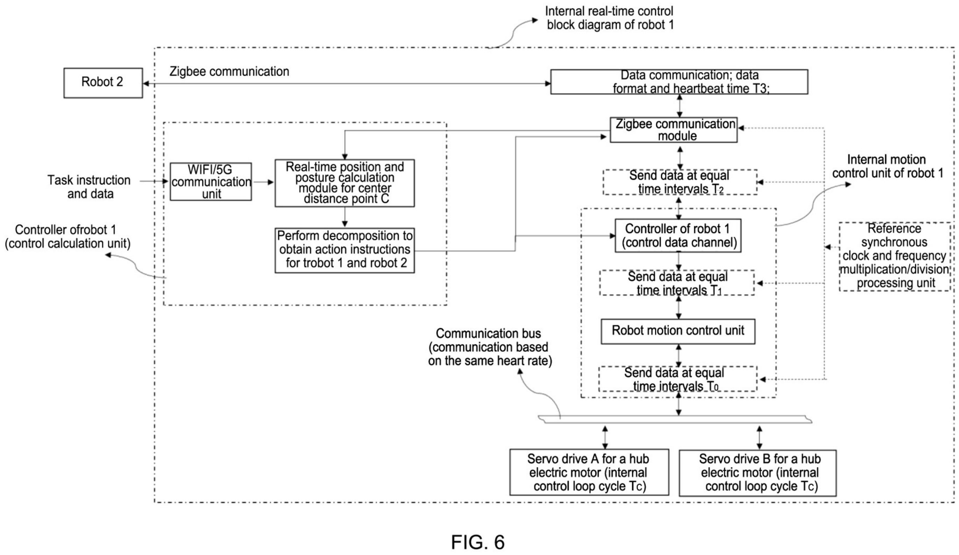

In the present invention, the motion control units of each robot and corresponding servo drives exchange data via an industrial communication bus, such as CanOpen and EtherCat. In order to ensure a synchronized real-time control performance, industrial communication buses employed across different robots are based on the same heartbeat rate, thus enabling synchronized real-time coordination of internal control among all servo drives. As shown in FIG. 6, the motion control units of the robots 1 and 2 send corresponding motion instruction data once to corresponding servo drives at every first predetermined period T₀. The control calculation unit of the first robot 1 sends corresponding motion instruction data once to the motion control unit of the first robot via a control data channel at every second predetermined period T₁. The control calculation unit of the first robot 1 sends corresponding motion instruction data once to the first communication module (i.e., the Zigbee communication module) via the control data channel at every third predetermined period T₂, so as to transmit corresponding motion instruction data to the corresponding second robot 2 through the first communication module.

In the present invention, a heartbeat period of the first communication module is a fourth predetermined period T₃, and an internal control period of the servo drives is a fifth predetermined period T_{c}. Herein, the first predetermined period T₀, the second predetermined period T₁, the third predetermined period T₂, the fourth predetermined period T₃, and the fifth predetermined period T_{c} are equal or integer multiples of one another. Such data interaction mode with synchronized time intervals achieves temporal controllability and temporal predictability for controlling data interaction, thereby having high real-time performance and determinism. Herein, the control data channel, the first communication module, and the motion control unit employ the same clock signal.

It can be seen that in the present invention, the periods for performing internal control, internal data transmission, and external data transmission by the first robot and the second robot are identical or integer multiples of one another, and are based on a common clock signal. That is, the internal control periods, data transmission, and the external communication data transmission of the robot controllers have a unified rhythm (data update period instants are aligned). For processes that do not require equally short period, a time period as integer multiples may be set, thus achieving controllable and predictable timing for all data flows for all data streams, whether control streams or sensor data streams, which is a real-time measure, thereby ensuring the collaborative control.

The control process as shown in FIG. 6 has an identical internal control structure for dual robots. Control periods and data transmission between the two robots are executed based on timed Zigbee communication for data interaction, thus ensuring synchronization between the two robots. The synchronized control within and between the dual robots is ensured at levels of physical control flow, control loop step, and control parameter transmission timing, featured by low latency, high temporal predictability, and stable control rhythm, and establishing a foundation for high-performance collaborative control of dual robots.

In an implementable mode, the motion parameter data is also transmitted via WIFI communication. Such transmission is performed between two robots, and between the robots and the dispatch system. The robots and the dispatch system can also communicate via 5G. How to acquire final motion data of the robots and exchange the data with the dispatch system is also a problem to be considered in the present invention.

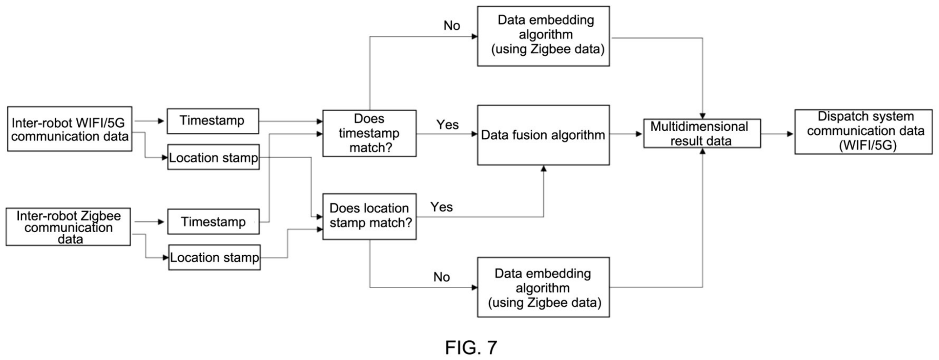

Specifically, the present invention employs a data fusion processing method as shown in FIG. 7. When the first robot simultaneously issues the current motion instruction data for the second robot via the first communication module (Zigbee) and the second communication module (WIFI), the second robot determines whether a timestamp and a location stamp (the location stamp referring to spatial position coordinate data contained) corresponding to the motion instruction data of the second robot from the first communication module and the second communication module match, and performs fusion processing based on a determination result.

In one embodiment, if either the timestamp or the location stamp matches, data in the two communication modes are considered as the same data, a predefined data fusion algorithm is employed to fuse matching motion instruction data, and a fused result serves as final motion instruction data of the second robot; if neither the timestamp nor the location stamp matches, the motion instruction data from the second communication module is discarded, and the motion instruction data from the first communication module serves as final motion instruction data of the second robot, where the final motion instruction data can be fed back to the robot dispatch center via the WIFI/5G communication module.

In another embodiment, if both the timestamp and the location stamp match, the matching motion instruction data is fused, and a fused result serves as final motion instruction data of the second robot; if either the timestamp or the location stamp does not match, the motion instruction data from the second communication module is discarded, and the motion instruction data from the first communication module serves as final motion instruction data of the second robot, where the final motion instruction data can be fed back to the robot dispatch center via the WIFI/5G communication module.

Result data processed by the above method is multidimensional result data, which serves as final result data for the robot to perform data interaction with the dispatch system. Such motion data fusion processing method improves the reliability and accuracy of robot motion data transmission and processing, addresses the phenomena such as data incompleteness, data disconnection, and packet loss caused by unreliability of communication such as WIFI, and enables high operation reliability and coordination for the dual collaborating robots.

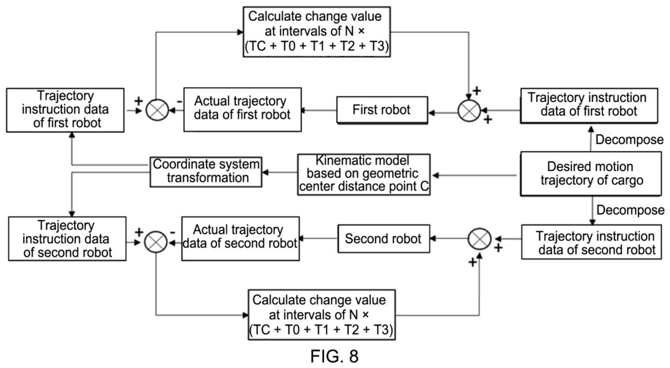

As shown in FIG. 8, the present invention further provides a collaborative control architecture for mobile robots. A kinematic model based on a virtual geometric center point C is adopted. A desired motion trajectory (i.e., trajectory instruction data) of the point servers as input, and desired motion trajectories for a first robot 1 and a second robot 2 decomposed through coordinate system transformation are output. The desired motion trajectories are respectively compared with actual movement trajectories of corresponding robots to obtain a deviation, i.e., trajectory error. Using a time period T = N * (T_{c} + T₀ + T₁ + T₂ + T₃) as an observation time period interval for the trajectory error, to calculate an error change value between two adjacent time periods, and the error change value is compensated into trajectory instruction data of the robot 1 and the robot 2, respectively, thereby forming dynamic compensation control.

Specifically, the collaborative control architecture of the present invention includes the first robot as collaborative transfer virtual geometric center and at least one second robot, and takes the first robot, the second robot, and a cargo as a single rigid body. The first robot calculates current motion instruction data of the virtual geometric center point C based on the transfer task data, sensor data of the first robot, and sensor data of the second robot; then, current respective motion instruction data for the first robot 1 and the second robot 2 are calculated respectively based on current motion instruction data of the virtual geometric center point C; and the second robot and the first robot synchronously perform collaborative motions based on current respective motion command data.

In the collaborative control architecture, as shown in FIG. 8, the first robot further can calculate respective actual trajectory data of the first robot and the second robot based on the sensor data of the first robot and the sensor data of the second robot; then calculate the trajectory instruction data of the virtual geometric center based on the transfer task data and respective actual trajectory data of the first robot and the second robot; subsequently, calculate respective trajectory instruction data (the trajectory instruction data referring to desired motion trajectory, specifically calculated based on the kinematic model of the virtual geometric center and coordinate transformation herein) of the first robot and the second robot based on the desired motion trajectory of the virtual geometric center. Herein, the trajectory instruction data and the motion instruction data can be simultaneously issued to the second robot (given the limited bandwidth Zigbee, the large amount of trajectory-related data, and relatively low requirement for real-time performance, transmitting the trajectory-related data via WIFI, as shown in FIG. 5), so as to allow the second robot and the first robot to perform collaborative motions based on current respective motion instruction data and trajectory instruction data.

Herein, the first robot further can acquire an error change value between the respective trajectory instruction data and actual trajectory data for the first robot and the second robot over an interval of a previous predetermined duration T (for example, T = N * (T₀ + T₁ + T₂ + T₃ + T_{c}), where N is a positive integer), and correct current respective trajectory instruction data for the first robot and the second robot, based on the corresponding error change value, as specifically shown in FIG. 8. Thus, the dynamic compensation control is formed, and the robot collaborative control is finally achieved.

While specific embodiments of the present invention have been described in the above, those skilled in the art could understand that these are provided by way of example only, and the scope of protection of the present invention is defined by the appended claims. Those skilled in the art could make various changes or modifications to these embodiments without departing from the principle and essence of the present invention, and these changes and modifications shall fall within the scope of protection of the present invention.

## Claims

1. A collaborative control method for mobile robots, applied to collaboratively transfer a cargo by a first robot and at least one second robot, **characterized in that** the method comprises executing, by the first robot, steps of:
taking the first robot, the second robot, and the cargo as a single rigid body, and determining a virtual geometric center of the rigid body;
calculating current motion instruction data of the virtual geometric center based on received transfer task data, sensor data of the first robot itself, and sensor data of the second robot;
calculating current respective motion instruction data for the first robot and the second robot based on the current motion instruction data of the virtual geometric center point; and
transmitting the current motion instruction data for the second robot to the corresponding second robot, so as to allow the second robot and the first robot to perform collaborative motions based on the current respective motion instruction data.

2. The collaborative control method according to claim 1, **characterized in that** periods for performing internal control, internal data transmission, and external data transmission by the first robot and the second robot are identical or integer multiples of one another, and are based on a common clock signal.

3. The collaborative control method according to claim 1, **characterized in that** the first robot receives the sensor data of the second robot via a first communication module;
the first robot transmits current motion instruction data for the second robot to the corresponding second robot via the first communication module, or via the first communication module and a second communication module, wherein
the first communication module is a Zigbee communication module, and the second communication module is a WIFI communication module.

4. The collaborative control method according to claim 1, **characterized in that** the step of calculating the current motion instruction data of the virtual geometric center based on the received transfer task data, the sensor data of the first robot itself, and the sensor data of the second robot comprises:
calculating actual trajectory data of the virtual geometric center based on the sensor data of the first robot and the sensor data of the second robot;
calculating desired trajectory data of the virtual geometric center based on the transfer task data and the actual trajectory data of the virtual geometric center; and
calculating current motion instruction data of the virtual geometric center based on the desired trajectory data of the virtual geometric center.

5. The collaborative control method according to claim 4, **characterized in that** the step of calculating the actual trajectory data of the virtual geometric center based on the sensor data of the first robot and the sensor data of the second robot comprises:
calculating actual motion data of the first robot and the second robot based on the sensor data of the first robot and the sensor data of the second robot;
calculating actual motion data of the virtual geometric center based on the actual motion data of the first robot and the second robot; and
calculating the actual trajectory data of the virtual geometric center based on the actual motion data of the virtual geometric center.

6. The collaborative control method according to claim 5, **characterized in that** the step of calculating the actual motion data of the virtual geometric center based on the actual motion data of the first robot and the second robot comprises:
performing reverse conversion, based on a pre-established conversion matrix, on the actual motion data of the first robot and the second robot, to obtain the actual motion data of the virtual geometric center; and
the step of calculating current respective motion instruction data for the first robot and the second robot based on the current motion instruction data of the virtual geometric center point comprises:
performing conversion on the current motion instruction data of the virtual geometric center based on the conversion matrix, so as to decompose the current motion instruction data of the virtual geometric center into current respective motion instruction data for the first robot and the second robot.

7. The collaborative control method according to claim 1, **characterized in that** the first robot simultaneously transmits current motion instruction data for the second robot to the corresponding second robot via a first communication module and a second communication module, and the method further comprises executing, by the second robot, data fusion steps of:
determining whether a timestamp and a location stamp corresponding to the motion instruction data from the first communication module and the second communication module match;
in response to that either the timestamp or the location stamp matches, performing fusion on the matched motion instruction data, and taking a fused result as final motion instruction data; and in response to that neither the timestamp nor the location stamp matches, discarding the motion instruction data from the second communication module, and taking the motion instruction data from the first communication module as final motion instruction data; alternatively,
in response to that both the timestamp and the location stamp match, performing fusion on the matched motion instruction data, and taking a fused result as final motion instruction data; and in response to that either the timestamp or the location stamp does not match, discarding the motion instruction data from the second communication module, and taking the motion instruction data from the first communication module as final motion instruction data.

8. A mobile robot, **characterized in that** the mobile robot is the first robot or the second robot implementing the collaborative control method according to any one of claims 1-7, wherein the robot comprises a robot body, drive wheels provided at a bottom of the robot body, and a bearing platform provided on top of the robot body and configured to bear the cargo.

9. The mobile robot according to claim 8, **characterized in that** the mobile robot is a differential drive robot;
the bearing platform is configured to be actively or passively rotatable on the robot body; and/or
the bearing platform is a liftable structure or a non-liftable structure.

10. A collaborative control architecture for mobile robots, **characterized in that** the architecture comprises a first robot and at least one second robot collaboratively transferring a cargo, and the first robot, the second robot, and the cargo serve as a single rigid body;
the first robot calculates current motion instruction data of a virtual geometric center of the rigid body based on transfer task data, sensor data of the first robot itself, and sensor data of the second robot, and decomposes current motion instruction data of the virtual geometric center into current respective motion instruction data for the first robot and the second robot; and
the second robot and the first robot perform collaborative motions based on the current respective motion instruction data.

11. The collaborative control architecture according to claim 10, **characterized in that** the first robot is further configured to:
calculate respective actual trajectory data of the first robot and the second robot based on the sensor data of the first robot and the sensor data of the second robot;
calculate a desired motion trajectory of the virtual geometric center based on the transfer task data and the respective actual trajectory data of the first robot and the second robot; and
calculate respective trajectory instruction data of the first robot and the second robot based on the desired motion trajectory of the virtual geometric center, so as to allow the second robot and the first robot to perform collaborative motions based on the current respective motion instruction data and the trajectory instruction data; and
the first robot further calculates an error change value between the respective trajectory instruction data and actual trajectory data for the first robot and the second robot over an interval of a previous predetermined duration, and correct the current respective trajectory instruction data for the first robot and the second robot based on the corresponding error change value.

12. The collaborative control architecture according to claim 10, **characterized in that** the first robot and the second robot are further respectively configured with a hub electric motor configured to be driven by a corresponding servo drive, and a motion control unit correspondingly connected to the servo driver, wherein
the motion control units of the first robot and the second robot control the respective servo drives to operate based on the current respective motion instruction data, so as to allow the first robot and the second robot to perform collaborative motions based on the current respective motion instruction data.

13. The collaborative control architecture according to claim 12, **characterized in that** the motion control units of the first robot and the second robot send the corresponding motion instruction data once to the corresponding servo drives at every first predetermined period T₀;
the first robot sends the corresponding motion instruction data once to the motion control unit of the first robot itself via a control data channel at every second predetermined period T₁;
the first robot sends the corresponding motion instruction data once to the first communication module via the control data channel at every third predetermined period T₂, so as to transmit the corresponding motion instruction data to the corresponding second robot through the first communication module;
an operation period of the first communication module is a fourth predetermined period T₃, and an internal control period of the servo drives is a fifth predetermined period T_{c}, wherein
the first predetermined period T₀, the second predetermined period T₁, the third predetermined period T₂, the fourth predetermined period T₃, and the fifth predetermined period T_{c} are equal or integer multiples of one another; and the control data channel, the first communication module, and the motion control unit employ a same clock signal.
